Europäisches Patentamt

European Patent Office

Office européen des brevets

(11) Veröffentlichungsnummer: **0 299 321 B1**

# (12) EUROPÄISCHE PATENTSCHRIFT

(45) Veröffentlichungstag der Patentschrift: **21.10.92**

(51) Int. Cl.5: **G05B 11/42**, G05B 11/28

(21) Anmeldenummer: **88110660.3**

(22) Anmeldetag: **04.07.88**

(54) **Schaltender PI-Regler mit Rückführung.**

(30) Priorität: **15.07.87 DE 3723383**

(43) Veröffentlichungstag der Anmeldung:
**18.01.89 Patentblatt 89/03**

(45) Bekanntmachung des Hinweises auf die
Patenterteilung:
**21.10.92 Patentblatt 92/43**

(84) Benannte Vertragsstaaten:
**AT CH DE FR GB IT LI NL SE**

(56) Entgegenhaltungen:
**EP-A- 0 069 515**
**DE-A- 2 534 016**
**DE-A- 3 037 154**

**PATENT ABSTRACTS OF JAPAN, Band 11,
Nr.161 (E-509)(2608),23.Mai 1987;& JP-A-61
293075**

**PATENT ABSTRACTS OF JAPAN, Band 10,
Nr. 324 (P-512)(2380),05.November 1986;& JP-
A-61 131103**

(73) Patentinhaber: **SIEMENS AKTIENGESELL-
SCHAFT
Wittelsbacherplatz 2
W-8000 München 2(DE)**

(72) Erfinder: **Kallina, Günter, Dr.-Ing.
Schillerstrasse 22
W-7514 Eggenstein(DE)**

## Beschreibung

Die Erfindung betrifft einen schaltenden PI-Regler gemäß dem Oberbegriff des Anspruchs 1.

Regler mit Rückführungen sind allgemein bekannt, z. B. aus "Kleines Handbuch technischer Regelvorgänge" von Oppelt, 5. Auflage, 1972, Seite 237 ff und 586 ff. Durch die Art der Rückführung wird das Regelverhalten bestimmt. Die bekannten schaltenden PI-Regler haben entweder die Nachteile, daß sie zum Schwingen neigen, daß sie schwer einzustellen sind oder daß die Regelparameter Verstärkung $K_p$ und Nachstellzeit $T_n$ nicht direkt einstellbar sind. Ein weiterer wesentlicher Nachteil der bekannten Regler einfacher Struktur ist, daß ihre Parameter abhängig sind von der Größe der Regeldifferenz.

Der vorliegenden Erfindung liegt die Aufgabe zugrunde, einen Regler zu schaffen, der bei gutem Regelverhalten stabil ist, dessen Parameter Verstärkung und Nachstellzeit direkt einstellbar und unabhängig von der Regelabweichung sind.

Erfindungsgemäß wird diese Aufgabe mit den im kennzeichnenden Teil des Anspruchs 1 angegebenen Maßnahmen gelöst.

Die Rückführung kann aus mehreren parallelen Zweigen mit jeweils gesonderter Nachstellzeit bestehen. Die rückwirkungsfreie Einstellbarkeit der Parameter folgt daraus, daß die Multiplikation mit den Parametern im Vorwärtszweig durch eine Multiplikation mit dem Kehrwert der Parameter im Rückführungszweig kompensiert wird.

Ausgestaltungen und Weiterbildungen der Erfindung sind in den Unteransprüchen angegeben. Anhand der Zeichnung werden im folgenden zwei Ausführungsbeispiele der Erfindung näher beschrieben und erläutert.

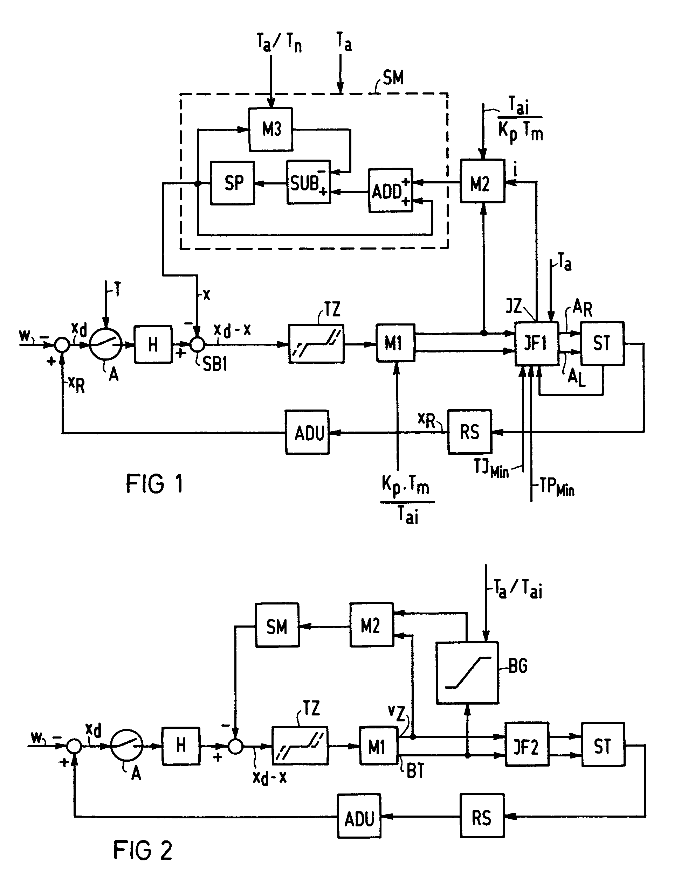

In Figur 1 ist mit RS eine Regelstrecke bezeichnet. Die Regelgröße $x_R$, z. B. der Durchfluß durch eine Rohrleitung, soll durch Verstellen eines Stellgliedes ST so geregelt werden, daß sie gleich der Führungsgröße w ist, die im Ausführungsbeispiel digital dargestellt ist. Vor dem Vergleich mit der Führungsgröße w wird daher die Regelgröße $x_R$ von einem Analog-Digital-Umsetzer ADU in einen digitalen Wert umgewandelt. Die Regelabweichung $x_d$ wird über ein Abtast- und Halteglied A, H dem einen Eingang eines im Vorwärtszweig eines Reglers liegenden Subtrahierers SB1 zugeführt, dessen anderer (-)-Eingang an den Rückführungszweig angeschlossen ist. Die Differenz zwischen Regelabweichung und Ausgangssignal des Rückführungszweiges gelangt über ein Totzonenglied TZ auf den Eingang eines Multiplizierers M1, dessen anderen Eingang der Wert $K_p T_m/T_{ai}$ zugeführt ist. Darin bedeuten Kp die Reglerverstärkung, Tm die Stellzeit des Stellgliedes ST, also z. B. die Zeit, die der Stellmotor eines Ventils braucht, um das Ventil von der Schließstellung in die voll geöffnete Stellung zu bringen, und Tai die Abtastzeit eines das Stellglied ansteuernden Impulsformers IF1. Der Impulsformer arbeitet in der Weise, daß er den ihm zugeführten Eingangswert in einen Impuls umsetzt, dessen Dauer proportional zum Eingangswert, zweckmäßig gleich dem Produkt aus Eingangswert und Abtastzeit Tai ist. Demgemäß gibt das Verhältnis $T_m : T_{ai}$ den Eingangswert an, der erforderlich ist, um das Stellglied von der einen Endstellung in die andere zu bringen. Je nach Vorzeichen des Eingangswertes erscheint der Ausgangsimpuls an einem Ausgang AL oder an einem Ausgang AR. Die Impulse werden einer Leistungsstufe im Stellglied ST zugeführt, die den Motor des Stellgliedes speist, so daß, gleichförmige Bewegung des Stellgliedes vorausgesetzt, seine Stellungsänderung proportional dem Eingangswert des Impulsformers IF1 ist. Dieser Wert ist ein Maß für die Verstellung des Stellgliedes ST, die erforderlich ist, damit die Regelabweichung $x_d$ Null wird. Zu beachten ist, daß die dem Stellglied zugeführten Impulse im allgemeinen eine Mindestdauer haben müssen, damit das Stellglied überhaupt anläuft, und daß entsprechend auch die Pausen eine Mindestdauer haben müssen. Betragen daher Z. B. die Impulsmindestdauer 50 msec und die Abtastdauer $T_{ai}$ des Impulsformers 20 msec, so wird, wenn der Eingangswert 1 oder 2 ist, kein Impuls abgegeben. Bei einem Eingangswert von 3 ist die Dauer des Ausgangsimpulses 60 msec. Das Stellglied enthält Endschalter, deren Stellung dem Impulsformer IF1 mitgeteilt werden. Spricht ein Endschalter an, so wird der entsprechende Ausgang AR bzw. AL des Impulsformers gesperrt. An einem Ausgang IZ liefert der Impulsformer einen Wert, der die Anzahl der während der Abtastperiode des Reglers tatsächlich abgearbeiteten Eingangswerte angibt, also das Verhältnis der Gesamtdauer der Impulse an den Ausgängen AR, AL zur Abtastzeit $T_{ai}$. Dieser Wert kann gleich dem Eingangswert sein, ist es aber dann nicht, wenn das Stellglied bis in eine Endstellung gefahren ist oder wenn der Eingangswert größer ist als die Anzahl der Impulse, die während einer Reglerabtastperiode abgearbeitet werden können.

Über den Ausgang AL gibt der Impulsformer IF1 dem Stellglied ST ein Signal für Linkslauf, über den Ausgang AR für Rechtslauf. An den dritten Ausgang IZ ist der Rückführungszweig angeschlossen, der einen Multiplizierer M2 und ein Rechenglied SM enthält.

Das Ergebnis der Multiplikation im Multiplizierer M1 wird nach Betrag und Vorzeichen getrennt zum Impulsformer IF1 übertragen. Der Betrag bestimmt die Länge des ausgegebenen Impulses, das Vorzeichen den Ausgang AR, AL, über den der Impuls ausgegeben wird, und damit die Drehrichtung des Stellmotors. Das Vorzeichen wird ferner dem im Rückführungszweig liegenden Multiplizierer M2 zugeführt, der ferner die Anzahl i der in der Reglerabtastperiode ausgeführten Impulse erhält. Diese Anzahl wird mit dem Wert $T_{ai}/K_p T_m$ multipliziert, das ist der Kehrwert des Wertes, mit dem im Multiplizierer M1 multipliziert wurde. Dies bedeutet, daß das Ausgangssignal des Multiplizierers M2 und damit das Rückführungssignal x am Subtrahierer SB1 unabhängig von den Parametern $T_{ai}$, $K_p$, $T_m$ ist.

Ein Rechenglied SM enthält zwei Stufen. In der ersten Stufe, einem Addierer ADD, wird der Ausgangswert des Multiplizierers M2 zum letzten Ausgangswert $x_k$ der Recheneinheit SM addiert. Vom Additionsergebnis wird das in einem Multiplizierer M3 aus dem Ausgangswert der Recheneinheit SM und dem Faktor $T_a/T_n$ gebildete Produkt subtrahiert. Mit $T_n$ ist die Nachstellzeit des Reglers und mit $T_a$ wieder dessen Abtastperiode bezeichnet. Das Ergebnis $x_{k+1}$ wird in einen Speicher SP übernommen und als Rückführungswert dem Subtrahierer SB1 zugeführt. Der neue Wert $x_{k+1}$ wird in zwei Schritten mit einem Zwischenwert $z_k$ als Ergebnis des ersten Schrittes errechner:

$$z_k = i_k \quad \frac{T_a}{K_p \, T_m} + x_k$$

$$x_{k+1} = z_k \left(1 - \frac{T_{ai}}{T_N}\right)$$

Mit $i_k$ ist die Anzahl der vom Impulsformer während der Reglerabtastperiode abgearbeiteten Impulse bezeichnet. Die Abtastperiode $T_a$ des Reglers ist kleiner oder zumindest gleich der Nachstellzeit $T_n$, damit das Verhältnis $T_a/T_n$ kleiner gleich 1 und der Regler stabil ist. Der beschriebene Rechenvorgang wird in jeder Abtastperiode wiederholt. Zweckmäßig wird jeweils zum selben Zeitpunkt auch die neue Regelgröße $x_R$ bzw. die Regel abweichung $x_d$ ermittelt. Aus der neuen Differenz $x_d$ - x, die der Vorgabe der Änderung der Stellgliedstellung entspricht, errechnet der Multiplizierer M1 die Anzahl der Impulse, die der Impulsformer IF1 zum Erreichen der Vorgabe der Stellungsänderung abarbeiten muß. Die am Ende der Abtastperiode $T_{a,k+1}$ tatsächlich abgearbeiteten Impulse $i_{k+1}$ gibt der Impulsformer IF1 an seinem Ausgang IZ aus, und der Rechenvorgang wird zur Ermittlung des nächsten Rückführungswertes $x_{k+2}$ erneut durchgeführt.

In der bisherigen Beschreibung wurde das Totzonenglied TZ außer acht gelassen. Dieses dient dazu, das Rauschen in der Signaldifferenz $x_d$-x, das im wesentlichen durch das Rauschen der Regelgröße $x_R$ verursacht ist, zu unterdrücken. Durch Verbreitern der Totzone kann die Schalthäufigkeit des Reglers verkleinert werden. Vorteilhaft wird ein sich selbständig an das Rauschen anpassendes Totzonenglied eingesetzt, wie es z. B. in der DE-PS 28 39 654 angegeben ist. Durch Hinzufügen einer Hysterese kann die Schalthäufigkeit des Stellgliedes verrringert werden.

Im Ausführungsbeispiel nach Figur 1 ist ein Impulsformer verwendet, der einen Ausgang IZ aufweist, über den die Anzahl der während einer Reglerabtastperiode $T_a$ abgearbeiteten Impulse abgegeben wird. Steht ein solcher Impulsformer nicht zur Verfügung, sondern nur einer, der lediglich die Stellsignale für das Stellglied erzeugt, so kann der neue Regler gemäß dem in Figur 2 gezeigten Prinzip aufgebaut werden. Der vereinfachte Impulsformer ist dort mit IF2 bezeichnet. Die Anzahl der in einer Abtastperiode $T_a$ ausgeführten Impulse wird dadurch nachgebildet, daß der Eingangswert des Impulsformers IF2 über einen Begrenzer BG mit dem Grenzwert $T_a/T_{ai}$ geführt ist, d. h., der maximale Wert, der vom Begrenzer abgegeben wird, ist die maximale Anzahl der in einer Abtastperiode $T_a$ ausführbaren Impulse. An den Begrenzer ist der Multiplizierer M2 angeschlossen. Im weiteren stimmen Aufbau und Funktion der Ausführungsbeispiele nach Figur 1 und Figur 2 überein, so daß sich eine weitere Beschreibung erübrigt.

Der neue Regler weist eine Reihe von Vorteilen auf. Er ist einfach mit einem programmierten Rechner realisierbar. Addieren, Subtrahieren, Multiplizieren und die für den Impulsformer und den Begrenzer erforderlichen logischen Operationen sind einfach realisierbare Standardfunktionen und erfordern nur wenig Rechenzeit. Die Reglerparameter $K_p$ und $T_n$ und auch die anderen Parameter sind direkt ohne Umrechnung einstellbar. Von der Abtastperiode $T_a$ wird nur verlangt, daß sie kleiner als die Nachstellzeit $T_n$ ist; ansonsten ist sie frei wählbar. Ihre Dauer hat keinen Einfluß auf die Stabilität des Reglers. Wesentlich ist, daß Verstärkung und Nachstellzeit nur von den eingestellten Parametern abhängen, und daß insbesondere keine Abhängigkeit von der Größe der Regelabweichung und den anderen Parametern besteht, was Voraussetzung für eine einfache Reglereinstellung ist.

**Patentansprüche**

1. Schaltender PI-Regler mit einem Vorwärtszweig und einem Rückführungszweig, dessen Ausgangssignal als Rückführungssignal (x) in einem im Vorwärtszweig angeordneten Differenzbildner (DF) von der Regelabweichung ($x_d$) subtrahiert wird, **gekennzeichnet durch**

   - im Vorwärtszweig wird aus der Differenz

$(x_d-x)$ zwischen Regelabweichung und dem Rückführungssignal ein der Sollbewegung des Stellgliedes (ST) entsprechendes Signal gebildet;

- im Rückführungszweig wird aus dem der Sollbewegung entsprechenden Signal ein der tatsächlichen Bewegung entsprechendes Signal gebildet;

- im Rückführungszweig ist ein Rechenglied (SM) enthalten, welches periodisch in je einer Reglerabtastperiode $(T_a)$ das der tatsächlichen Bewegung entsprechende Signal in einem ersten Schritt zum Rückführungssignal addiert und in einem zweiten Schritt vom Additionsergebnis das Produkt des Rückführungssignals mit dem Verhältnis von Reglerabtastperiode $(T_a)$ zu Nachstellzeit $(T_N)$ subtrahiert und das Subtraktionsergebnis als neues Rückführungssignal dem Differenzbildner (DF) zuführt.

2. Schaltender PI-Regler nach Anspruch 1, **dadurch gekennzeichnet,** daß die Differenz zwischen Regelabweichung $(x_d)$ und Rückführungssignal (x) mit der Reglerverstärkung $(K_p)$ multipliziert und das Produkt einerseits zum Stellsignal weiterverarbeitet, andererseits in den Rückführungszweig eingespeist wird, wo es durch die Reglerverstärkung $(K_p)$ dividiert wird.

3. Schaltender PI-Regler nach Anspruch 1 oder 2, **gekennzeichnet durch**

- ein Impulsformer (IF1, IF2) zur Ansteuerung des Stellgliedes (ST) setzt einen ihm zugeführten Wert in einen Impuls um, dessen Dauer gleich dem Produkt aus dem Eingangswert und einer Impulsformer-Abtastzeit $(T_{ai})$ ist;

- die Differenz zwischen Regelabweichung $(x_d)$ und Rückführungssignal (x) wird mit dem Verhältnis von Stellzeit $(T_m)$ zur Abtastzeit $(T_{ai})$ des Impulsformers (IF1, IF2) multipliziert und das Produkt wird als Sollbewegung entsprechendes Signal dem Impulsformer (IF1, IF2) zugeführt;

- das Signal im Rückführungszweig wird mit dem Verhältnis von Impulsformer-Abtastzeit $(T_{ai})$ zu Stellzeit $(T_m)$ multipliziert und dem Rechenglied (SM) zugeführt.

4. Schaltender PI-Regler nach Anspruch 3, **dadurch gekennzeichnet,** daß der Impulsformer (IF1) einen Ausgang (IZ) aufweist, über den die Anzahl i der in der jeweiligen Abtastperiode $(T_a)$ des Reglers ausgeführten Impulse ausgegeben wird und daß diese Anzahl in den Rückführungszweig eingegeben wird.

5. Schaltender PI-Regler nach Anspruch 3, **dadurch gekennzeichnet,** daß der Rückführungszweig an den Eingang des Impulsformers (IF2) angeschlossen ist und einen Begrenzer (BG) enthält, der das rückgeführte Signal auf eine in der Regler-Abtastperiode $T_a$ maximalmögliche Stellgliedänderung entsprechenden Wert begrenzt.

6. Schaltender PI-Regler nach Anspruch 5, **dadurch gekennzeichnet,** daß der Begrenzer (BG) das Eingangssignal auf den Wert $T_a/T_{ai}$ begrenzt, wobei $T_a$ Regler-Abtastperiode und $T_{ai}$ Impulsformer-Abtastzeit ist.

7. Schaltender PI-Regler nach einem der Ansprüche 1 bis 6, **dadurch gekennzeichnet,** daß die Differenz zwischen Regelabweichung $(x_d)$ und Rückführungssignal (x) über ein Totzonenglied (TZ) geführt ist.

**Claims**

1. A switching PI controller with a forward path and a feedback path, a difference generator (SB1) being arranged in the forward path for subtracting the output signal of the controller, as a feedback signal (x), from the system deviation $(x_d)$ characterised by,

- a signal corresponding to the desired activity of the control element (ST) is formed in the forward path from the difference $(x_d-x)$ between the system deviation and the feedback signal;

- a signal corresponding to the actual activity is formed in the feedback path from the signal corresponding to the desired activity,

- an arithmetic element (SM) is contained in the feedback path, which element in a first step in each controller sampling period $(T_a)$ periodically adds the signal corresponding to the actual activity to the feedback signal and, in a second step, subtracts the product of the feedback signal and the ratio of controller sampling period $(T_a)$ to adjusting time $(T_N)$ from the addition result and the subtraction result is supplied as a new feedback signal to the difference generator (SB1).

2. A switching PI controller according to claim 1, characterised in that the difference between the system deviation $(x_d)$ and the feedback signal (x) is multiplied by the controller gain $(K_p)$ and the product, on the one hand, is processed subsequently into the control signal, and, on the other hand, is fed into the feedback path, where it is divided by the controller gain ($K_p$).

3.   A switching PI controller according to claim 1 or 2, characterised by

- a pulse shaper (IF1, IF2) for controlling the control element (ST) converts a value supplied to it into a pulse, the duration of which is equal to the product of the input value and a pulse shaper- sampling time ($T_{ai}$);
- the difference between the system deviation ($x_d$) and the feedback signal (x) is multiplied with the ratio of control time ($T_m$) to the sampling time ($T_{ai}$) of the pulse shaper (IF1, IF2) and the product is supplied as a signal, corresponding to the desired activity, to the pulse shaper (IF1, IF2);
- the signal in the feedback path is multiplied by the ratio of pulse shaper sampling time ($T_{ai}$) to the control time ($T_{ai}$) and is supplied to the arithmetic element (SM).

4.   A switching PI controller according to claim 3, characterised in that the pulse shaper (IF1) has an output (IZ), by way of which the number i of pulses realised in the respective sampling period ($T_a$) of the controller is output and in that this number is input into the feedback path.

5.   A switching PI controller according to claim 3, characterised in that the feedback path is connected to the input of the pulse shaper (IF2) and contains a limiter (BG), which limits the signal which is fed back to a value corresponding to the maximum possible control element alteration in the controller sampling period $T_a$.

6.   A switching PI controller according to claim 5, characterised in that the limiter (BG) limits the input signal to the value $T_a/T_{ai}$, wherein $T_a$ is the controller sampling period and $T_{ai}$ is the pulse shaper sampling time.

7.   A switching PI controller according to one of claims 1 to 6, characterised in that the difference between the system deviation ($x_d$) and feedback signal (x) is directed by way of a dead-zone element (TZ).

**Revendications**

1.   Régulateur PI à commutation comportant une branche directe et une branche de réaction, et dont le signal de sortie est soustrait, en tant que signal de réaction (x), de l'écart de réglage ($x_d$), dans un dispositif de formation de différence (DF) monté dans la branche directe, caractérisé en ce que

- dans la branche directe, un signal correspondant au déplacement de consigne du circuit de réglage (ST) est formé à partir de la différence ($x_d$-x) entre l'écart de réglage et le signal de réaction;
- dans la branche de réaction, un signal correspondant au déplacement effectif est formé à partir du signal correspondant au déplacement de consigne;
- dans la branche de réaction il est prévu un circuit de calcul (SM), qui, à des intervalles correspondant respectivement à une période d'échantillonnage ($T_a$) du régulateur, ajoute périodiquement le signal correspondant au déplacement effectif au signal de réaction lors d'un premier pas et, lors d'un second pas, le produit du signal de réaction par le rapport de la période d'échantillonnage ($T_a$) du régulateur à la durée de réglage d'asservissement ($T_N$) est soustrait du résultat de l'addition et le résultat de la soustraction est envoyé en tant que nouveau signal de réaction au dispositif de formation de différence (DF).

2.   Régulateur PI suivant la revendication 1, caractérisé par le fait que la différence entre l'écart de réglage ($x_d$) et le signal de réaction (x) est multipliée par l'amplification ($K_p$) du régulateur et que le produit, d'une part, continue à être traité pour former le signal de réglage et, d'autre part, est introduit dans la branche de réaction, où il est divisé par l'amplification ($K_p$) du régulateur.

3.   Régulateur PI à commutation suivant la revendication 1 ou 2, caractérisé par le fait que

- un dispositif de mise en forme d'impulsions (IF1, IF2) servant à commander le circuit de réglage (ST) convertit une valeur qui lui est envoyée en une impulsion, dont la durée est égale au produit de la valeur d'entrée par une durée d'échantillonnage ($T_{ai}$) du dispositif de mise en forme d'impulsions;
- la différence entre l'écart de réglage ($x_d$) et le signal de réaction (x) est multipliée par le rapport de la durée de réglage ($T_m$) à la durée d'échantillonnage ($T_{ai}$) du dispositif de mise en forme d'impulsions (IF1,IF2) et que le produit est envoyé en tant que signal correspondant au déplacement de consigne, au dispositif de mise en forme d'impulsions (IF1,IF2);

- le signal présent dans la branche de réaction est multiplié par le rapport de la durée d'échantillonnage ($T_{ai}$) du dispositif de mise en forme d'impulsions à la durée de réglage ($T_m$) et est envoyé au circuit de calcul (SM).

4. Régulateur PI à commutation suivant la revendication 3, caractérisé par le fait que le dispositif de mise en forme d'impulsions (IF1) possède une sortie (IZ), au moyen de laquelle le nombre i des inpulsions exécutées pendant la période respective d'échantillonnage ($T_a$) du régulateur est délivré et que ce nombre est introduit dans la branche de réaction.

5. Régulateur PI à commutation suivant la revendication 3, caractérisé par le fait que la branche de réaction est raccordée à l'entrée du dispositif de mise en forme d'impulsions (IF2) et comporte un limiteur (BG) qui limite le signal envoyé par réaction à une valeur qui correspond à la variation possible du circuit de réglage pendant la période d'échantillonnage $T_a$ du régulateur.

6. Régulateur PI à commutation suivant la revendication 5, caractérisé par le fait que le limiteur (BG) limite le signal d'entrée à la valeur $T_a/T_{ai}$, $T_a$ étant la période d'échantillonnage du régulateur et $T_{ai}$ la durée d'échantillonnage du dispositif de mise en forme d'impulsions.

7. Régulateur PI à commutation suivant l'une des revendications 1 à 6, caractérisé par le fait que la différence entre l'écart de réglage ($x_d$) et le signal de réaction (x) est transmise par l'intermédiaire d'un circuit à zone morte (TZ).

FIG 1

FIG 2